Europäisches Patentamt

European Patent Office

Office européen des brevets

(19)

(11) Veröffentlichungsnummer: **0 006 906**
**B1**

(12) # EUROPÄISCHE PATENTSCHRIFT

(45) Veröffentlichungstag der Patentschrift: 30.09.81

(51) Int. Cl.³: **F 16 K 11/06**

(21) Anmeldenummer: **78900110.4**

(22) Anmeldetag: **14.08.78**

(86) Internationale Anmeldenummer:
**PCT/DE78/00020**

(87) Internationale Veröffentlichungsnummer:
**WO 79/00134 22.03.79 Gazette 79/6**

(54) MISCHVENTIL FÜR DAS SANITÄRFACH.

(30) Priorität: **07.09.77 DE 2740205**

(43) Veröffentlichungstag der Anmeldung:
**23.01.80 Patentblatt 80/2**

(45) Bekanntmachung des Hinweises auf die Patenterteilung:
**30.09.81 Patentblatt 81/39**

(84) Benannte Vertragsstaaten:
**FR GB SE**

(56) Entgegenhaltungen:
**DE - A - 2 658 023**
**DE - B - 2 658 022**
**US - A - 3 533 436**
**US - A - 3 533 444**
**US - A - 3 788 354**

(73) Patentinhaber: **FRIEDRICH GROHE
ARMATURENFABRIK GmbH & CO
Hauptstrasse 137
D-5870 Hemer (DE)**

(72) Erfinder: **BERNAT, Georg
Grüner Weg 48
D-5750 Menden (DE)**
Erfinder: **NOLTING, Karl-Heinz
Am Obsthof 10
D-5870 Hemer (DE)**
Erfinder: **JOHN, Claus
Toftehoj 17
DK-6400 Sonderborg (DK)**

Courier Press, Leamington Spa, England.

Mischventil für das Sanitärfach

Die Erfindung betrifft ein Mischventil mit den im Oberbegriff des Anspruchs 1 angegebenen Merkmalen.

Ein Mischventil dieser Gattung ist in der Druckschrift US—A—3 788 354 beschrieben. Bei diesem bekannten Ventil sind in einem Ventilgehäuse zwei im wesentlichen unbeweglich angeordnete Ventilplatten mit Durchbrüchen für die Heranführung von Kalt- und Warmwasser vorgesehen. Zwischen den Ventilplatten ist eine mit Überströmkanälen versehene, mit Hilfe eines im Ventilgehäuse gelagerten Doppelhebels verschiebbare Schieberplatte dicht angelagert. Der Doppelhebel ist dabei einerseits mit einem Griffstück versehen und trägt andererseits ein kugelförmiges Endteil, mit dem er in eine Bohrung eines Kopfteils der Schieberplatte einfaßt.

Diese bekannten Mischventile haben jedoch den Nachteil, daß sie ein relativ zum Schwenkwinkel des Doppelhebels proportionales oder sogar überproportionales Ändern des Mischungsverhältnisses im mittleren Schwenkwinkelbereich, dem sogenannten Komfortbereich, in dem ein Mischwasser von der Temperatur von ca. 30 bis 45°C in dem Mischventil erzeugt werden soll, zeigen. Dieser bevorzugte Temperaturbereich kann mit den bekannten Mischventilen nur relativ ungenau eingestellt werden. Dadurch ist eine feinfühlige Abstimmung des ausfließenden Mischwassers nahezu unmöglich, was insbesondere bei Bade- und Duscheinrichtungen sehr unangenehm ist, da der menschliche Körper schon äußerst geringe Temperaturabweichungen sehr leicht erspürt.

Der Erfindung liegt die Aufgabe zugrunde, ein Mischventil der eingangs erläuterten Art zu schaffen, das in dem bevorzugten Einstellbereich, insbesondere zwischen 30 und 45°C, eine besonders feinfühlige und komfortable Einstellung der Mischwassertemperatur ermöglicht, wobei es mit zur Aufgabe gehört, diese Einrichtung in konstruktiv einfacher sowie raumsparender und kostengünstig herzustellender Art zu schaffen, deren Bedienung sicher zu handhaben ist und deren Mechanismus eine lange Lebensdauer hat.

Diese Aufgabe wird durch die im kennzeichnenden Teil des Anspruchs 1 angegebenen Merkmale gelöst. Weitere Augestaltungen der Erfindung sind in den Ansprüchen 2 bis 7 angegeben.

Mit dieser Ausbildung wird erreicht, daß im mittleren Abschnitt des gesamten Schwenkbereichs das Mischungsverhältnis sich relativ zum Schwenkwinkel nur gerinfügig oder unterproportional, in den Endbereichen — wo nur Kalt- oder Heißwasser gezapft wird — beschleunigt oder überproportional ändert. Durch die Wahl einer geeigneten Versatzstrecke zwischen dem Kugelkopf und der Mittelachse kann der bevorzugte, gestreckte Einstellbereich optimal festgelegt werden.

Mit der direkten Anlenkung des Doppelhebels an dem Kopfglied ist in äußerst kostengünstiger Weise ein über einen langen Zeitraum zuverlässig arbeitendes, feinfühlig einstellbares Mischventil herzustellen.

Zur Erreichung einer äußerst dauerhaften Verbindung zwischen dem Kopfglied und dem Doppelhebel ist der Kugelkopf zumindest an seiner Oberfläche aus einem harten und verschleißfesten Werkstoff hergestellt und in dem aus Messing oder einem ähnlich festen, gut gleitfähigen Werkstoff gebildeten röhrenförmigen Abschnitt des Hebels gehaltert.

Schließlich kann vorteilhaft, z.B. zur individuellen Abstimmung des Mischventils, der Kugelkopf mit seinem Halsteil auf dem Kopfglied in seiner Lage zur Schieberplatte verstellbar angeordnet sein.

Ein Ausführungsbeispiel der Erfindung ist in der Zeichnung dargestellt und wird im folgenden näher beschrieben. Es zeigt

Figur 1 einen Längsschnitt durch ein Mischventil;

Figur 2 einen Längsschnitt durch den Kopfbereich auf der Schnittebene C—D der Figur 1;

Figure 3 einen Schnitt auf der Ebene A—B der Figur 1;

Figur 4 in schematischer Darstellung den Vorgang bei der Einstellung des Mischungsverhältnisses;

Figur 5 eine graphische Darstellung zur Veranschaulichung der Wirkungsweise des Mischventils.

In einer Armatur 1 ist ein Ventilgehäuse 2 gelagert. Die Zuflüsse von Kalt- und Warmwasser sind im Bodenteil gedichtet über Kanäle 3 einer formschlüssig im Gehäuse gehalterten Grundplatte 4 zugeleitet und gelangen durch Durchbrüche in einen Überströmmkanal einer verschiebbar an einem Kopfglied 6 gehalterten Schieberplatte 5. Das hier entstehende Mischwasser gelangt über einen Kanal 7 in den Armaturenauslauf. Durch ein Verschieben der Schieberplatte 5 parallel zur Mittelachse 8 werden zur Ausflußmengenregulierung die beiden parallel nebeneinander angeordneten Zuflußöffnungen in der Grundplatte 4 je nach Bewgungsrichtung mehr oder weniger geöffnet oder geschlossen. Die Einstellung des Mischungsverhältnisses von Kalt- und Warmwasser, d.h. Temperatureinstellung des ausfließenden Mischwassers, erfolgt dadurch, daß das Kopfglied 6 mit der formschlüssig gehalterten Schieberplatte 5 um eine axial verschiebbare, quer zur Mittelachse 8 liegende Drehachse 9 zur Grundplatte 4 verschwenkt wird. Bei diesem Verschwenkvorgang wird in etwa der gleiche Gesamtdurchtrittsquerschnitt der beiden parallel angeordneten Zuflußöffnungen für Kalt- und Warmwasser aufrecht erhalten, wobei die eine Durchtrittsöffnung in ihrem Durchtrittsquerschnitt verringert, die zweite Durchtrittsöffnung im Querschnitt um etwa den gleichen Betrag vergrößert wird. Es erfolgt also eine Veränderung des Mischungsverhältnisses, d.h. eine Temperaturänderung des ausfließenden Mischwassers.

Auf der Armatur 1 ist ein Kopfgehäuse 10 begrenzt verdrehbar befestigt und nimmt den äußeren Teil des Kopfgliedes 6 mit einem schlanken Halsteil 11 und einem Kugelkopf 12 auf. Der Kugelkopf 12 mit dem schlanken Halsteil 11 ist dabei um eine Versatzstrecke 13 von der Mittelachse 8 angeordnet.

In dem Kopfgehäuse 10 ist in der Mantelfläche ein Doppelhebel 14 auf- und abbewegbar um eine Achse 15 gelagert. Doppelhebel 14 hat im Kopfgehäuse 10 einen röhrenförmig ausgebildeten Abschnitt 16, in dem koaxial eine zylindrische Bohrung 17 ausgebildet ist. Die Bohrung ist als Gleitführung ausgebildet und nimmt als Paßteil den Kugelkopf 12 auf, wobei der röhrenförmige Abschnitt 16 zum Durchtritt des Halsteils 11 in der Wandung mit einem Längsschlitz 18 versehen ist. Der Längsschlitz ist dabei so ausgebildet, daß seine Seitenwände 19 entsprechend dem maximalen Schwenkwinkel des Halsteiles geschrägt ausgebildet sind.

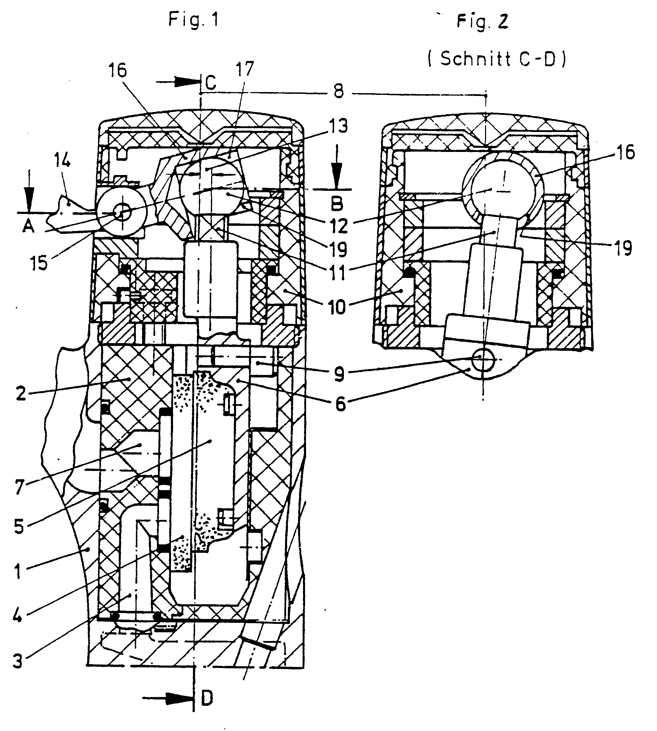

Die Handhabung des Mischventils zur Steuerung der Mischwasserauslaufmenge ist aus der Figur 1 ersichtlich. Durch die Auf- und Abbewegung des Doppelhebels 14 um die Achse 15 wird der Kugelkopf 12 mit dem Kopfglied 6 und der formschlüssig gehalterten Schieberplatte 5 parallel zur Mittelachse 8 abwärts oder aufwärts verschoben, so daß entsprechende gleichsinnige Änderungen an den beiden Durchtrittsöffnungen für Warm- und Kaltwasser erfolgen.

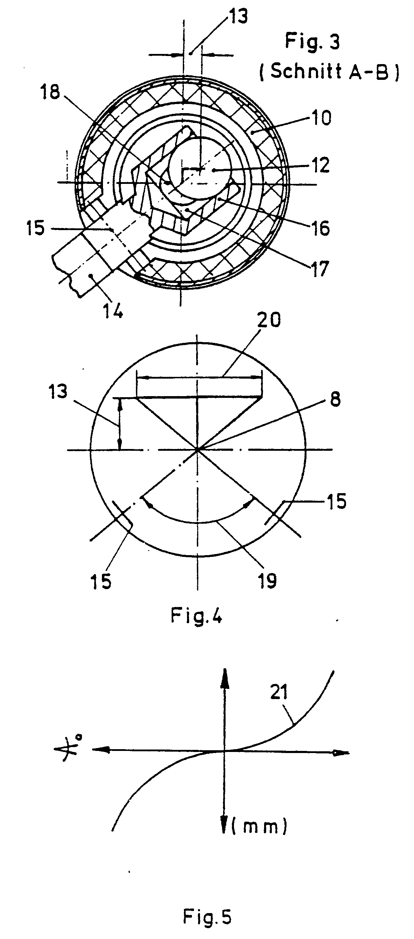

Die Einstellung des Mischungsverhältnisses erfolgt durch ein Verschwenken des Doppelhebels 14 mit dem gekoppelten Kopfgehäuse 10 um die Mittelachse 8, wie insbesondere der Figur 4 zu entnehmen ist. Über einen Schwenkwinkel 19 des Doppelhebels 14 wird der Kugelkopf 12 um die Strecke 20 ausgelenkt. In Figur 5 ist diese Beziehung graphisch aufgetragen, wobei auf der Abszisse der Schwenkwinkel in Grad, auf der Ordinate die Auslenkstrecke in Millimetern aufgetraten ist. Die Linie 21 gibt hierbei den Verschiebeweg in Abhängigkeit vom Schwenkwinkel an. Aus der Darstellung ist klar ersichtlich, daß im mittleren Bereich eine verzögerte, in den Endbereichen eine beschleunigte Verschiebung des Kugelkopfes 12 erfolgt. Die gewünschte Ausdehnung des bevorsugten Einstellbereichs kann durch eine geeignete Wahl der Versatzstrecke 13 optimiert werden.

## Patentansprüche

1. Mischventil für das Sanitärfach mit einer Schieberplatte (5), die zur Regulierung des Mischungsverhältnisses um eine im Ventilgehäuse (2) verschiebbare Drehachse (9) verschwenkbar und zur Einstellung der Auslaufmenge verschiebbar gelagert ist und mit einem zum Verstellen der Schieberplatte (5) dienenden Doppelhebel (14), der um eine zur Verschieberichtung der Schieberplatte (5) parallele Mittelachse (8) zur Regulierung des Mischungsverhältnisses drehbar und in einer in der Mittelachse (8) verlaufenden Ebene zur Einstellung der Auslaufmenge schwenkbar gegenüber dem Ventilgehäuse gelagert ist, wobei der eine Arm des Doppelhebels (14) als Griffstück und der andere Arm mittels einer eine Verkantung sowie eine gegenseitige Verschiebung zulassenden Verbindung mit der Schieberplatte (5) in Antriebsverbindung steht, dadurch gekennzeichnet, daß die Antriebsverbindung als starr an der Schieberplatte (5) angeordnetes Kopfglied, das in Längsrichtung des anderen Armes an diesem verschieblich geführt ist, ausgebildet ist, derart, daß die wirksame Länge des anderen Armes sich entsprechend der Schwenklage des Kopfgliedes (6) ändert.

2. Mischventil nach Anspruch 1, dadurch gekennzeichnet, daß der Doppelhebel (14) in einem Mantel eines um die Mittelachse (8) drehbar auf dem Ventilgehäuse (2) gehalterten Kopfgehäuses (10) auf- und abbewegbar gelagert ist.

3. Mischventil nach den Ansprüchen 1 und 2, dadurch gekennzeichnet, daß das Kopfglied (6) im äußeren Bereich als schlankes Halsteil (11) mit einem Kugelkopf (12) ausgebildet ist und von einem röhrenförmigen Abschnitt (16) des Doppelhebels (14) aufgenommen ist, dessen zylindrische Bohrung (17) so ausgelegt ist, daß der Kugelkopf als Paßteil in ihr beweglich lagerbar ist, wobei der röhrenförmige Abschnitt für den Durchtritt des Halsteils in der Wandung mit einem Längsschlitz (18) parallel zur Bohrungsachse versehen ist.

4. Mischventil nach den Ansprüchen 1 bis 3, dadurch gekennzeichnet, daß der röhrenförmige Abschnitt (16) an der äußeren Stirnseite von Bohrung (17) und Längsschlitz (18) unverschlossen ist und die Seitenwände (19) des Längsschlitzes entsprechend der maximalen Schräglage des Halsteiles (11) geschrägt ausgebildet sind.

5. Mischventil nach den Ansprüchen 1 bis 4, dadurch gekennzeichnet, daß der Kugelkopf (12) aus einem harten, verschleißfesten Werkstoff besteht oder mit einer entsprechenden Oberflächenschicht, wie Hartverchromungsschicht, versehen ist und der röhrenförmige Abschnitt (16) aus Messing oder einem ähnlich festen, gut gleitfähigen Werkstoff hergestellt ist.

6. Mischventil nach den Ansprüchen 1 bis 5, dadurch gekennzeichnet, daß das Halsteil mit dem Kugelkopf (12) in seiner Lage zur Schieberplatte (5) am Kopfglied (6) verstellbar befestigt ist.

7. Mischventil nach den Ansprüchen 1 bis 6, dadurch gekennzeichnet, daß das Halsteil mit dem Kugelkopf (12) in bezug auf eine Versatzstrecke zur Mittelachse am Kopfglied (6) verstellbar befestigt ist.

## Claims

1. Mixing valve for sanitary plumbing with a valve plate (5) which is supported for the purpose of regulation of the mixing ratio in such a way as to be swivelable around a swivel pin (9) which is displaceable in the valve housing (2) and slidably supported for the purpose of adjusting the outflow volume and with a double lever (14) for moving the valve plate (5), which lever is supported for the purpose of regulation of the mixing ratio so as to be rotatable around a central axis (8) parallel to the direction of sliding of the valve plate (5) and for the purpose of adjusting the outflow volume so as to be pivotable in relation to the valve housing in a plane running in the central axis (8), one arm of the double lever (14) as a handle and the other arm by means of a connection allowing a tilting and reciprocal displacement being in a driving connection with the valve plate (5), characterised in this, that the driving connection is constructed as a head member rigidly fitted to the valve plate (5), which member is longitudinally run along the other arm so as to be displaceable along it, in such a way that the effec-tive length of the other arm changes according to the pivoting position of the head member (6).

2. Mixing valve according to Claim 1, characterised in this, that the double lever (14) is supported in a casing of a head housing secured rotatably round the central axis (8) on the valve housing (2) in such a way as to be movable up and down.

3. Mixing valve according to Claims 1 and 2, characterised in this, that the head member (6) is constructed in the outer area as a slender neck part (11) with a ball end (12) and is received by a tubular recess (16) in the double lever (14), the cylindrical bore (17) of which is so designed that the ball end can be movably supported in it as a fitting part, the tubular recess being provided, for the passage of the neck part, with a longitudinal slot (18) in the wall parallel to the axis of the bore.

4. Mixing valve according to Claims 1 to 3, characterised in this, that the tubular recess (16) is unclosed at the external front end of the bore (17) and longitudinal slot (18) and the side walls (19) of the longitudinal slot are made sloping corresponding to the maximum sloping position of the neck part (11).

5. Mixing valve according to Claims 1 to 4, characterised in this, that the ball end (12) consists of a hard, wear-resistant material or is provided with a corresponding surface layer, such as a layer of hard chromium plating, and the tubular recess (16) is made of brass or a similar strong material with good slidability.

6. Mixing valve according to Claims 1 to 5, characterised in this, that the neck part with the ball end (12) is fixed to the head member (6) in such a way as to be displaceable in its position in relation to the valve plate (5).

7. Mixing valve according to Claims 1 to 6, characterised in this, that the neck part with the ball end (12) is fixed to the head member (6) in such a way as to be displaceable in relation to the central axis with reference to a staggered section.

## Revendications

1. Vanne mélangeuse pour installations sanitaires comportant une plaque glissante (5), qui est agencée de manière pivotante autour d'un axe de rotation (9), déplaçable dans le boîtier de vanne (2), pour le réglage du rapport de mélange et de manière déplaçable en translation pour le réglage du débit de sortie, et un levier double (14) qui sert à l'ajustement de la plaque glissante (5) et qui est agencé, vis-à-vis du boîtier de vanne, de manière tournante autour d'un axe central (8) parallèle à la direction de translation de la plaque glissante (5) pour le réglage du rapport de mélange et de manière pivotante dans un plan passant par l'axe central (8) pour le réglage du débit de sortie, vanne dans laquelle un bras du levier double (14) sert de poignée et l'autre bras se trouve en liaison d'entraînement avec la plaque glissante (5) au moyen d'une liaison autorisant un basculement ainsi qu'un déplacement mutuel, ladite vanne étant caractérisée en ce que la liaison d'entraînement est formée d'une pièce de tête (6) qui est disposée rigidement sur la plaque glissante (5) et qui est guidée de manière coulissante sur cet autre bras dans la direction longitudinale de celui-ci, de sorte que la longueur active dudit autre bras se modifie en fonction de la position de pivotement de la pièce de tête (6).

2. Vanne mélangeuse selon la revendication 1, caractérisé en ce que le levier double (14) est agencé de manière mobile vers le haut et vers le bas dans une paroi d'un carter de tête (10) maintenu, de manière tournante autour de l'axe central (8), sur le boîtier de vanne (2).

3. Vanne mélangeuse selon l'une des revendications 1 ou 2, caractérisée en ce que la pièce de tête (6) prend, dans la région extérieure, la forme d'un col élancé (11) avec une tête sphérique (12) et est reçue par une portion tubulaire (16) du levier double (14), dont l'alésage cylindrique (17) est conçu de telle sorte que la tête sphérique y soit montée de manière mobile comme pièce d'ajustement, la portion tubulaire étant munie d'une fente longitudinale (18) parallèle à l'axe de l'alésage pour le passage du col dans la paroi.

4. Vanne mélangeuse selon l'une quelconque des revendications 1 à 3, caractérisée en ce que la portion tubulaire (16) n'est pas fermée à l'extrémité extérieure de l'alésage (17) et de la fente longitudinale (18) et en ce que les

parois latérales (19) de la fente sont inclinées pour s'adapter à l'inclinaison maximale du col (11).

5. Vanne mélangeuse selon l'une quelconque des revendications 1 à 4, caractérisée en ce que la tête sphérique (12) est constituée en un matériau dur, résistant à l'usure, ou est prévue avec une couche de surface correspondante, telle qu'un chromage dur, et en ce que la portion tubulaire (16) est en laiton ou en un matériau solide analogue ayant de bonnes propriétés de glissement.

6. Vanne mélangeuse selon l'une quelconque des revendications 1 à 5, caractérisée en ce que le col avec la tête sphérique (12) est fixé sur la pièce de tête (6) de manière ajustable en position par rapport à la plaque glissante (5).

7. Vanne mélangeuse selon l'une quelconque des revendications 1 à 6, caractérisé en ce que le col avec la tête sphérique (12) est fixé sur la pièce de tête (6) de manière ajustable en ce qui concerne un décalage par rapport à l'axe central.

**0 006 906**

Fig. 1

Fig. 2

( Schnitt C-D )

Fig. 3
( Schnitt A-B )

Fig. 4

Fig. 5

2